# EUROPÄISCHE PATENTSCHRIFT

(11) **EP 2 356 159 B1**
(45) Veröffentlichungstag und Bekanntmachung des Hinweises auf die Patenterteilung: **27.08.2014**
(21) Anmeldenummer: 09768059.9
(22) Anmeldetag: 09.12.2009
(51) Int. Cl.: C08F 263/00, C08F 263/04, C08F 283/01, C08F 289/00, C08F 290/06, C08L 51/00, C08L 51/08, C09D 151/00, C09D 151/08, C08F 8/00

(54) **PFROPFCOPOLYMERE UND DEREN VERWENDUNG ALS LOW-PROFILE ADDITIVE**
GRAFT COPOLYMERS AND USE THEREOF AS LOW-PROFILE ADDITIVES
COPOLYMÈRES GREFFÉS ET LEUR UTILISATION EN TANT QU'ADDITIFS ANTI-RETRAIT

(30) Priorität: 10.12.2008 DE 102008054482
(43) Veröffentlichungstag der Anmeldung: 17.08.2011
(73) Patentinhaber: Wacker Chemie AG, 81737 München (DE)
(72) Erfinder: BAUERS, Florian, 84453 Mühldorf (DE); ZARKA, Michael Tobias, 84489 Burghausen (DE)
(74) Vertreter: Schuderer, Michael
(86) Internationale Anmeldenummer: PCT/EP2009/066714
(87) Internationale Veröffentlichungsnummer: WO 2010/066781

(56) Entgegenhaltungen:
- WO-A1-95/09202
- WO-A1-2009/071506
- GB-A- 1 174 391
- US-A1- 2003 065 079
- US-A1- 2004 097 701
- US-B1- 6 187 861
- US-B1- 6 576 698
- US-B1- 6 746 555

## Beschreibung

Die Erfindung betrifft Pfropfcopolymere, Verfahren zu deren Herstellung sowie deren Verwendung beispielsweise als Low-Profile-Additive (LPA).

Für die Herstellung von Composite-Bauteilen werden häufig radikalisch vernetzbare Polymerisat-Zusammensetzungen auf Basis von beispielsweise ungesättigten Polyesterharzen (UP-Harze) eingesetzt. Ungesättigte Polyesterharze sind erhältlich durch Polykondensation von Dicarbonsäuren oder Dicarbonsäureanhydriden mit Polyolen. Die radikalisch vernetzbaren Polymerisat-Zusammensetzungen enthalten des Weiteren Monomere mit ethylenisch ungesättigten Gruppen, im Allgemeinen Styrol. Styrol wird der radikalisch vernetzbaren Polymerisat-Zusammensetzung beispielsweise zugegeben, um das vernetzbare Polymerisat zu lösen und um sicherzustellen, dass die radikalisch vernetzbare Polymerisat-Zusammensetzung eine fließfähige Masse ist. Als weitere Bestandteile enthalten die radikalisch vernetzbaren Polymerisat-Zusammensetzungen oftmals noch Fasermaterialien wie Glasfasern, Carbonfasern oder entsprechende Fasermatten (Fiber Reinforced Plastic composites = FPR composites), die zu einer Verstärkung der durch Aushärtung der radikalisch vernetzbaren Polymerisat-Zusammensetzungen erhältlichen Composite-Bauteile führen.

Ein Problem bei der Verarbeitung solcher radikalisch vernetzbaren Polymerisat-Zusammensetzungen zu Composite-Bauteilen ist der Volumenschwund während der Härtung der Polymerisat-Zusammensetzung. Zur Reduzierung des Schrumpfs bei der Aushärtung werden den radikalisch vernetzbaren Polymerisat-Zusammensetzungen daher sogenannte Low-Profile-Additive (LPA) zugegeben. Low-Profile-Additive reduzieren das Schrumpfen beim Aushärten, bauen Eigenspannungen ab, verringern Mikrorissbildung, und erleichtern das Einhalten von Fertigungstoleranzen. Bei den Low-Profile-Additiven handelt es sich üblicherweise um Thermoplaste wie Polystyrol, Polymethylmethacrylat und insbesondere Polyvinylacetat, welche häufig noch carboxylfunktionelle Comonomereinheiten enthalten. Entsprechende Low-Profile-Additive auf Basis von Vinylacetat und ethylenisch ungesättigten Carbonsäuren sind beispielsweise in der US 3718714 oder der DE-A 102006019686 beschrieben. WO2009071506 offenbart vernetzbare Vinylester - Copolymerisate erhältlich mittels Polymerisation von Vinylestern und Epoxy-Funktionellen Monomeren, und die Verwendung als LPA.

So werden in der EP-A 0414468 UP-Harze offenbart, bei denen als LPA A-B-Blockcopolymere zugesetzt werden, wobei der A-Block aus Vinylacetat und Butylacrylat und der B-Block aus Styrol oder dessen Copolymeren besteht. Für die Aushärtung dieser UP-Harze ist allerdings der Einsatz spezieller polymerer Peroxide notwendig. UP-Harze unter Einsatz von Blockcopolymeren aus Vinylacetatcopolymeren und Styrolcopolymeren als LPA werden auch in den Patentschriften GB 2087416 sowie US 4303762 beschrieben. Auch hier finden spezielle polymere Peroxide bei der Aushärtung Verwendung. GB1174391 offenbart ein Verfahren in dem ein Copolymer von Vinylacetat und Glycidylmethacrylat, und in einer polymeranalogen Umsetzung mit Acrylsäure umgesetzt wird. US6187861 und US20030065079 offenbaren die Herstellung von vernetzbaren Vinylester - Copolymeren in Gegenwart von, z.B., Methacrylaten und Dicarbonsäuren.

Die DE-A 102007055694 offenbart Polymere, die erhalten werden durch Polymerisation von Vinylestern und ethylenisch ungesättigten Epoxy-funktionellen Monomeren und anschließender polymeranaloger Umsetzung der so erhaltenen Polymere mit einer ethylenisch ungesättigten Carbonsäure. Die DE-A 102007055694 beschreibt die Aushärtung der Polymere durch radikalisch initiierte Polymerisation sowie den Einsatz der Polymere als LPA.

Die beschriebenen Polymere entfalten ihre Wirkung als LPA aber nur bei der Härtung von vernetzbaren Polymerisat-Zusammensetzungen unter erhöhten Temperaturen. Bei Raumtemperatur zeigen die gängigen LPA keine oder keine ausreichende Wirksamkeit. Aber bei einer Vielzahl von Verfahren zur Herstellung von Composite-Bauteilen, wie dem Hand-Lay-Up-Verfahren oder Infusions- oder Injektionsverfahren, beispielsweise Vacuum Infusion oder Resin Transfer Molding (RTM), erfolgt die Aushärtung der vernetzbaren Polymerisat-Zusammensetzungen gerade bei niedrigen Temperaturen, beispielsweise bei Raumtemperatur.

Vor diesem Hintergrund bestand die Aufgabe, Low-Profile-Additive (LPA) bereit zu stellen, welche dem Volumenschwund im Zuge der Aushärtung von radikalisch vernetzbaren Polymerisat-Zusammensetzungen entgegenwirken, selbst wenn die Aushärtung bei niedrigen Temperaturen, wie beispielsweise bei Raumtemperatur, erfolgt.

Die Aufgabe wurde überraschenderweise mit Pfropfcopolymeren gelöst, die erhalten wurden, indem Vinylestercopolymerisate zuerst einer polymeranalogen Umsetzung unterzogen und anschließend mit ethylenisch ungesättigten Monomeren gepfropft wurden. Die Pfropfcopolymere zeichnen sich in Folge dieses Herstellungsprozesses durch eine besondere Polymerarchitektur aus.

Gegenstand der Erfindung sind Pfropfcopolymere erhältlich durch
A) radikalisch initiierte Polymerisation von einem oder mehreren Vinylestern a), einem oder mehreren weiteren ethylenisch ungesättigten Monomeren b) enthaltend zumindest eine weitere funktionelle Gruppe,
B) anschließende polymeranaloge Umsetzung der Copolymere aus Stufe A), indem deren Monomereinheiten b) mit einem oder mehreren weiteren Monomeren b) so verknüpft werden, dass zumindest eine radikalisch polymerisierbare Gruppe in die Copolymere aus Stufe A) eingebracht wird, dadurch gekennzeichnet, dass
C) an die Produkte aus Stufe B) ein oder mehrere ethylenisch ungesättigte Monomere durch radikalisch initiierte Polymerisation anpolymerisiert werden.

In Stufe A) werden als Vinylester a) bevorzugt ein oder mehrere Vinylester von unverzweigten oder verzweigten Carbonsäuren mit 1 bis 20 C-Atomen, besonders bevorzugt 1 bis 15 C-Atomen eingesetzt. Beispiele für besonders bevorzugte Vinylester sind Vinylacetat, Vinylpropionat, Vinylbutyrat, Vinyl-2-ethylhexanoat, Vinyllaurat, 1-Methylvinylacetat und Vinylester von α-verzweigten Monocarbonsäuren mit 5 bis 13 C-Atomen, beispielsweise Vinylpivalat, VeoVa9^{R}, VeoVa10^{R} oder VeoVa11^{R} (Handelsnamen der Firma Hexion). Am meisten bevorzugt sind Vinylacetat, Vinylpivalat, Vinyllaurat, VeoVa9^{R} und VeoVa10^{R}.

Vorzugsweise werden in Stufe A) 15 bis 99,9 Gew.-% Vinylester a) eingesetzt, besonders bevorzugt 20 bis 99 Gew.-%, jeweils bezogen auf das Gesamtgewicht der Monomere zur Herstellung der Copolymere aus Stufe A).

Als bevorzugte Monomere b) werden folgende Monomere vorzugsweise eingesetzt, die im folgenden als nukleophile Monomere b) bezeichnet werden: ethylenisch ungesättigte Mono- und Dicarbonsäuren oder deren Salze, vorzugsweise Crotonsäure, Acrylsäure, Methacrylsäure, Fumarsäure oder Maleinsäure, langkettige Fettsäuren; Monoester der Fumarsäure oder der Maleinsäure, vorzugsweise deren Ethyl- oder Isopropylester; ethylenisch ungesättigte Sulfonsäuren oder deren Salze, vorzugsweise Vinylsulfonsäure, 2-Acrylamido-2-methylpropansulfonsäure; ethylenisch ungesättigte Alkohole, vorzugsweise 2-Hydroxyethylmethacrylat, Hydroxypropylmetacrylat, 2-Hydroxyethylacrylat, Hydroxypropylacrylat oder Glycerin-1-allylether; ethylenisch ungesättigte primäre, sekundäre oder tertiäre Amine, vorzugsweise 2-Dimethylaminoethylmethacrylat, 2-tert. Butylaminoethylmethacrylat, A1-lyl-N-(2-aminoethyl)-carbamat-hydrochlorid, Allyl-N-(6-amino-hexyl)-carbamat-hydrochlorid, Allyl-N-(3-aminopropyl)-hydro-chlorid, Allylamin oder Vinylpyridin; ethylenisch ungesättigte Amide, vorzugsweise 3-Dimethylaminopropylmethacrylamid, 3-Tri-methylammoniumpropylmethacrylamid chlorid; Phosphonsäuren oder deren Salze, vorzugsweise Vinylphosphonsäure, SIPOMER PAM-100^{R} oder SIPOMER-200^{R} (Handelsnamen der Firma Rhodia).

Besonders bevorzugte nukleophile Monomere b) sind Crotonsäure, Acrylsäure, Methacrylsäure, 2-Hydroxyethylacrylat und 2-Hydroxyethylmethacrylat.

Als bevorzugte Monomere b) werden vorzugsweise auch folgende Monomere eingesetzt, die im folgenden als elektrophile Monomere b) bezeichnet werden: ethylenisch ungesättigte Epoxide mit 1 bis 20 C-Atome, bevorzugt 1 bis 10 C-Atomen, besonders bevorzugt Glycidylacrylat, Glycidylmethacrylat (GMA) oder Allylglycidylether; ethylenisch ungesättigte Isocyanate, vorzugsweise 1-(Tsocyanato-1-methyl)-3-(methylethyl)-benzol); ethylenisch ungesättigte Anhydride, vorzugsweise Maleinsäureanhydrid.

Besonders bevorzugte elektrophile Monomere b) sind Glycidylacrylat und Glycidylmethacrylat; am meisten bevorzugt ist Glycidylmethacrylat.

Vorzugsweise werden in Stufe A) 0,1 bis 20 Gew.-%, besonders bevorzugt 0,2 bis 15 Gew.-%, ganz besonders bevorzugt 0,5 bis 10 Gew.-% und am meisten bevorzugt 0,5 bis 4 Gew.-% Monomere b) eingesetzt, jeweils bezogen auf das Gesamtgewicht der Monomere zur Herstellung der Copolymere aus Stufe A).

In Stufe A) können als zusätzliche Monomere ein oder mehrere Monomere c) eingesetzt werden ausgewählt aus der Gruppe umfassend Methacrylsäureester und Acrylsäureester von unverzweigten oder verzweigten Alkoholen mit 1 bis 15 C-Atomen, Vinylaromaten, Olefine, Diene, Vinylhalogenide, Silan-Monomere und Polysiloxane mit mindestens einer radikalisch polymerisierbaren funktionellen Gruppe.

Bevorzugte Ester der Acrylsäure oder Methacrylsäure sind Ester von unverzweigten oder verzweigten Alkoholen mit 1 bis 15 C-Atomen. Besonders bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Am meisten bevorzugt sind Methylacrylat, Methylmethacrylat, n-, iso- und t-Butylacrylat, 2-Ethylhexylacrylat und Norbornylacrylat.

Bevorzugte Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide werden üblicherweise Vinylchlorid, Vinylidenchlorid oder Vinylfluorid, vorzugsweise Vinylchlorid, eingesetzt.

Als Monomere c) können in Stufe A) auch ein oder mehrere Silan-Monomere eingesetzt werden. Geeignete Silan-Monomere sind polymerisierbare Silane bzw. Mercaptosilane in hydrolisierter Form. Bevorzugt sind gamma-Acryl- bzw. gamma-Methacryloxypropyltri(alkoxy)silane, α-Methacryloxymethyltri(alkoxy)silane, gamma-Methacryloxypropyl-methyldi(alkoxy)silane, Vinylalkyl-di(alkoxy)silane und Vinyltri(alkoxy)silane, wobei als Alkoxygruppen beispielsweise Methoxy-, Ethoxy-, Propoxy-, Isopropoxy-, Methoxyethylen, Ethoxyethylen-, Methoxypropylenglykolether- oder Ethoxypropylenglykolether-Reste eingesetzt werden können. Beispiele hierfür sind Vinyltrimethoxysilan, Vinyltriethoxysilan, Vinyltripropoxysilan, Vinyltriisopropoxysilan, Vinyltris-(1-methoxy)-isopropoxysilan, Vinyltributoxysilan, Vinyltriacetoxysilän, 3-Methacryloxypropyltrimethoxysilan, 3-Methacryloxypropyltriethoxysilan, 3-Methacryloxypropylmethyldimethoxysilan, 3-Methacryloxypropylmethyldiethoxysilan, Methacryloxymethyltrimethoxysilan, Methacryloxymethyltriethoxysilan, 3-Methacryloxypropyl-tris(2-methoxyethoxy)silan, Vinyltrichorsilan, Vinylmethyldichlorsilan, Vinyltris-(2-methoxyethoxy)-silan, Trisacetoxyvinylsilan, 3-(Triethoxysilyl)-propylbernsteinsäureanhydrid. Bevorzugt werden auch 3-Mercaptopropyltrimethoxysilan, 3-Mercaptopropyltriethoxysilan, Methacryloxymethyltriethoxysilan und 3-Mercaptopropylmethyldimethoxysilan.

Des Weiteren sind als Monomere c) auch lineare, verzweigte, cyclische oder dreidimensional vernetzte Silikone (Polysiloxane) mit mindestens 10, vorzugsweise 10 bis 1000 Siloxanwiederholungseinheiten und mit mindestens einer radikalisch polymerisierbaren funktionellen Gruppe geeignet. Als polymerisierbare, funktionelle Gruppen werden hierbei ethylenisch ungesättigte Gruppen wie Alkenylgruppen bevorzugt, wie beispielsweise Vinyl-, Allyl-, Butenyl-, sowie Acryloxyalkyl- und Methacryloxyalkyl-Gruppen, wobei die Alkylreste 1 bis 4 C-Atome enthalten. Bevorzugte Polysiloxane sind α,ω-Divinyl-Polydimethylsiloxane, α,ω-Di-(3-acryloxypropyl)-Polydimethylsiloxane, α,ω-Di-(3-methacryloxypropyl)-Polydimethylsiloxane. Bei den nur einfach mit ungesättigten Gruppen substituierten Silikonen sind α-Monovinyl-Polydimethylsiloxane, α-Mono-(3-aryloxypropyl)-Polydimethylsiloxane, α-Mono-(acryloxymethyl)-Polydimethylsiloxane, α-Mono-(3-methacryloxypropyl)-Polydimethylsiloxane bevorzugt. Bei den monofunktionellen Polydimethylsiloxanen befindet sich am anderen Kettenende ein Alkyl- oder Alkoxyrest, beispielsweise ein Methyl- oder Butylrest.

Vorzugsweise werden in Stufe A) 0 bis 70 Gew.-%, besonders bevorzugt 0 bis 50 Gew.-% Monomere c) eingesetzt, jeweils bezogen auf das Gesamtgewicht der Monomere zur Herstellung der Copolymere aus Stufe A).

Bevorzugte Copolymerisate der Stufe A) sind erhältlich durch radikalisch initiierte Polymerisation von einem oder mehreren Vinylestern a), vorzugsweise ausgewählt aus der Gruppe umfassend Vinylacetat, Vinylpivalat, Vinyllaurat, VeoVa9^{R}, VeoVa10^{R} und VeoVa11^{R}, und
einem oder mehreren weiteren ethylenisch ungesättigten Monomeren b) ausgewählt aus der Gruppe umfassend ethylenisch ungesättigte, Epoxy-funktionelle Monomere, vorzugsweise ausgewählt aus der Gruppe umfassend Glycidylacrylat, Glycidylmethacrylat (GMA) oder Allylglycidylether, und
gegebenenfalls einem oder mehreren zusätzlichen Monomeren c).

Bevorzugte Copolymerisate der Stufe A) sind auch erhältlich durch radikalisch initiierter Polymerisation von einem oder mehreren Vinylestern a), vorzugsweise ausgewählt aus der Gruppe umfassend Vinylacetat, Vinylpivalat, Vinyllaurat, VeoVa9^{R}, VeoVa10^{R} und VeoVa11^{R}, und
einem oder mehreren weiteren ethylenisch ungesättigten Monomeren b) ausgewählt aus der Gruppe umfassend ethylenisch ungesättigte, Carbonsäuren, vorzugsweise ausgewählt aus der Gruppe umfassend Acrylsäure, Methacrylsäure, Crotonsäure, Fumarsäure, Maleinsäure, 2-Hydroxyethylacrylat, 2-Hydroxyethylmethacrylat, und
gegebenenfalls einem oder mehreren zusätzlichen Monomeren c).

Werden bei der Herstellung der Copolymere in Stufe A) nukleophile Monomere b) eingesetzt, so sind für die anschließende polymeranaloge Umsetzung zur Herstellung der Produkte in Stufe B) im Allgemeinen elektrophile Monomere b) auszuwählen;
und bei Einsatz elektrophiler Monomere b) zur Herstellung der Copolymere in Stufe A) sind dagegen im Allgemeinen nukleophile Monomere b) für die anschließende polymeranaloge Umsetzung zur Herstellung der Produkte in Stufe B) auszuwählen.

Beispiele für bevorzugte und besonders bevorzugte Monomere b) für die polymeranaloge Umsetzung in Stufe B) sind dieselben Monomere b), die für die Polymerisation in Stufe A) entsprechend aufgeführt sind.

In Stufe B) werden mit den Monomeren b) also im Allgemeinen ethylenisch ungesättigte Gruppen als polymerisierbare Gruppe in die Copolymere aus Stufe A) eingebracht.

Vorzugsweise enthalten die Produkte in Stufe B) 0,1 bis 20 Gew.-%, besonders bevorzugt 0,2 bis 10 Gew.-%, am meisten bevorzugt 0,5 bis 4 Gew.-% Monomere b), jeweils bezogen auf das Gesamtgewicht der Produkte in Stufe B).

Von den insgesamt in den Produkten der Stufe B) enthaltenen Einheiten der Monomere b) werden bevorzugt 10 bis 70 Mol.-%, besonders bevorzugt 20 bis 55 Mol.-% in der Stufe B) eingesetzt.

Bei den Produkten der Stufe B) handelt es sich um vollständig modifizierte Vinylestercopolymere oder um teilmodifizierte Vinylestercopolymere. Vollständig modifizierte Vinylestercopolymere sind erhältlich, indem bei der polymeranalogen Umsetzung in Stufe B) sämtliche Monomereinheiten b) der Copolymere aus Stufe A) mit einem Monomer b) umgesetzt werden. Teilmodifizierte Vinylestercopolymere sind erhältlich, indem bei der polymeranalogen Umsetzung in Stufe B) nicht sämtliche Monomereinheiten b) der Copolymere aus Stufe A) mit einem Monomer b) umgesetzt werden.

Vorzugsweise sind 10 bis 100 %, besonders bevorzugt 90 bis 100 % der in den Copolymeren aus Stufe A) enthaltenen Monomereinheiten b) durch ethylenisch Monomere b) modifiziert. Insbesondere wenn die Copolymerisate der Stufe A) Einheiten von Monomeren aus der Gruppe der nukleophilen Monomere b), wie insbesondere ethylenisch ungesättigten Mono- oder Dicarbonsäuren oder deren Salze, enthalten, kann es von Vorteil sein, teilmodifizierte Vinylestercopolymere in Stufe C) einzusetzen, da dann Pfropfcopolymere erhalten werden, die in Formulierungen für entsprechende Anwendungen gegebenenfalls viskositätserhöhend wirken.

Die erfindungsgemäßen Pfropfcopolymere werden schließlich erhalten, indem die Produkte aus Stufe B) mit einem oder mehreren ethylenisch ungesättigten Monomeren, vorzugsweise einem oder mehreren Monomeren aus der Gruppe umfassend Vinylester a), Monomere b) und Monomere c) copolymerisiert werden. In Stufe C) bevorzugte Monomere sind ethylenisch ungesättigte Mono- oder Dicarbonsäuren oder deren Salze, Ester der Acrylsäure oder Methacrylsäure von unverzweigten oder verzweigten Alkoholen mit 1 bis 15 C-Atomen, Vinylhalogenide und Vinylaromaten; besonders bevorzugt sind hierbei Methacrylsäure, Acrylsäure, Methylacrylat, Methylmethacrylat, Vinylchlorid und Styrol; am meisten bevorzugt sind Methacrylsäure und Styrol.

In Stufe C) werden vorzugsweise 25 bis 99 Gew.-%, besonders bevorzugt 60 bis 98 Gew.-% ethylenisch ungesättigte Monomere eingesetzt, jeweils bezogen auf das Gesamtgewicht der Produkte in Stufe C).

Die Propfcopolymere haben Molekulargewichte Mn von 1.000 bis 400.000 g/mol, bevorzugt von 5.000 bis 200.000 g/mol und am meisten bevorzugt von 10.000 bis 100.000 g/mol. Die Angaben zu den Molekulargewichten Mn beziehen sich auf die Bestimmungsmethode mittels SEC ("Size Exclusion Chromatography") unter Einsatz eines Polystyrol-Standards in THF bei 60°C.

Die Propfcopolymere zeichnen sich durch ihre Polymerarchitektur aus. Ohne an eine spezielle Theorie bezüglich der Polymerarchitektur gebunden zu sein, wird angenommen, dass die Pfropfcopolymere im Wesentlichen aus Polymerketten aus Vinylestern a), Monomeren b) und gegebenenfalls Monomeren c) bestehen, an die in Stufe C) an die in Stufe B) eingeführten Monomereinheiten b) Polymerketten ethylenisch ungesättigter Monomere mittels radikalisch initiierter Polymerisation anpolymerisiert werden.

Ein weiterer Gegenstand der Erfindung sind Verfahren zur Herstellung von Pfropfcopolymeren durch
A) radikalisch initiierte Polymerisation von einem oder mehreren Vinylestern a),
   einem oder mehreren weiteren ethylenisch ungesättigten Monomeren b) enthaltend zumindest eine weitere funktionelle Gruppe,
B) anschließende polymeranaloge Umsetzung der Copolymere aus Stufe A), indem deren Monomereinheiten b) mit einem oder mehreren weiteren Monomeren b) so verknüpft werden,
   dass zumindest eine radikalisch polymerisierbare Gruppe in die Copolymere aus Stufe A) eingebracht wird, dadurch gekennzeichnet, dass
C) an die Produkte aus Stufe B) ein oder mehrere ethylenisch ungesättigte Monomere durch radikalisch initiierte Polymerisation anpolymerisiert werden.

Verfahren zur Herstellung der Copolymerisate der Stufe A) und der Produkte aus Stufe B) sind dem Fachmann bekannt und beispielsweise in der DE-A 102007055694 beschrieben.

Die Polymerisation in Stufe C) wird im Allgemeinen in Gegenwart von Radikalinitiatoren mittels radikalischer Suspensions-, Emulsions-, oder vorzugsweise Substanz- oder Lösungspolymerisationsverfahren durchgeführt.

Bei Durchführung des Lösungspolymerisationsverfahrens werden als Lösungsmittel vorzugsweise ein organisches Lösungsmittel oder ein Gemisch organischer Lösungsmittel oder ein Gemisch von einem oder mehreren organischen Lösungsmitteln und Wasser eingesetzt. Bevorzugte Lösungsmittel oder bevorzugte Lösungsmittelkomponenten in Lösungsmittelgemischen werden ausgewählt aus der Klasse der Alkohole, Ketone, Ester, Ether, aliphatischen Kohlenwasserstoffe, aromatischen Kohlenwasserstoffe und Wasser. Besonders bevorzugte Lösungsmittel sind aliphatische Alkohole mit 1 bis 6-C-Atomen wie Methanol, Ethanol, n-Propanol oder i-Propanol, Ketone wie Aceton oder Methylethylketon, Ester wie Methylacetat, Ethylacetat, Propylacetat oder Butylacetat oder Wasser. Am meisten bevorzugt sind Methanol, i-Propanol, Methylacetat, Ethylacetat und Butylacetat.

Die Reaktionstemperatur für die Herstellung der Pfropfcopolymere mit Polyvinylester Segmenten beträgt 20°C bis 160°C, vorzugsweise 40°C bis 140°C. Im Allgemeinen wird bei Normaldruck unter Rückfluss polymerisiert.

Geeignete Radikalinitiatoren sind beispielsweise öllösliche Initiatoren, wie t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan und Di-(4-t-Butylcyclohexyl)peroxydicarbonat. Geeignet sind auch Azoinitiatoren wie Azobisisobutyronitril. Die Initiatoren werden im Allgemeinen in einer Menge von 0.005 bis 3.0 Gew.-%, bevorzugt 0.01 bis 1.5 Gew.-%, jeweils bezogen auf Gesamtgewicht der Monomere zur Herstellung der Pfropfcopolymere mit Polyvinylester Segmenten eingesetzt.

Die Polymerisationsgeschwindigkeit kann durch die Temperatur, die Halbwertszeiten der Initiatoren, durch Verwendung von Initiatorbeschleunigern oder durch die Initiatorkonzentration gesteuert werden.

Die Einstellung des Molekulargewichts und des Polymerisationsgrades ist dem Fachmann bekannt. Diese kann z.B. durch Zugabe von Regler, durch das Verhältnis von Lösungsmittel zu Monomeren, durch Variation der Initiatorkonzentration, durch Dosiervariation von Monomeren und durch Variation der Polymerisationstemperatur erfolgen. Regler oder Kettentransfermittel sind zum Beispiel Alkohole, wie Methanol, Ethanol und Isopropanol, Aldehyde oder Ketone, wie Acetaldehyd, Propionaldehyd, Butyraldehyd, Aceton oder Methylethylketon, aber auch mercaptogruppenhaltige Verbindungen, wie Dodecylmercaptan, Mercaptopropionsäure oder mercaptogruppenhaltige Silicone.

Die Polymerisation kann unter Vorlage aller oder einzelner Bestandteile des Reaktionsgemisches, oder unter teilweiser Vorlage und Nachdosierung aller oder einzelner Bestandteile des Reaktionsgemisches, oder nach dem Dosierverfahren ohne Vorlage durchgeführt werden.

Bei Durchführung des Substanzpolymerisationsverfahrens in Stufe C) werden die in dieser Stufe eingesetzten ethylenisch ungesättigten Monomere vorzugsweise nicht vollständig umgesetzt, d.h. die Polymerisation wird vor vollständigem Umsatz der ethylenisch ungesättigten Monomere abgebrochen. Hierbei wird vorzugsweise die gesamte Menge an den Produkten aus Stufe B) und der ethylenisch ungesättigten Monomere sowie des Reglers und eine Teilmenge des Initiators vorgelegt. Die verbleibende Menge an Initiator wird zudosiert oder stoßweise zugegeben. Die Polymerisation kann zu jedem beliebigem Umsatz durch Zugabe eines oder mehrerer Polymerisationsinhibitoren abgebrochen werden. Diese Vorgehensweise hat den Vorteil, dass die Pfropfcopolymere in Form einer Lösung in ethylenisch ungesättigten Monomere anfallen, d.h. in der Form, in der die Pfropfcopolymere bei Verwendung als LPA Einsatz finden. Damit ist ein separater Verfahrensschritt zum Lösen der Pfropfcopolymere in ethylenisch ungesättigten Monomere nicht erforderlich.

Als Polymerisationsinhibitoren können alle hierfür gängigen Substanzen eingesetzt werden, wie beispielsweise Verbindungen aus der Klasse der Hydrochinone, Benzochinone, Phenole, Thiole, 1,3,5-Trinitrobenzol, Schwefel, Sauerstoff, 2,2-Diphenyl-1-pikrylhydrazyl. Besonders bevorzugt sind Hydrochinon und 4-Methoxyphenol.

Vorzugsweise wird die Polymerisation bei Durchführung des Substanzpolymerisationsverfahrens bei einem Umsatz von 30 bis 90 Mol-%, bevorzugt nach einem Umsatz von 40 bis 70 Mol-%, bezogen auf die Menge an ethylenisch ungesättigten Monomeren, abgebrochen.

Bei Durchführung der Suspensions-, Emulsions- oder Lösungspolymerisationsverfahrens wird die Polymerisation im Allgemeinen bis zu einem Festgehalt von 15 bis 95 Gew.-%, bevorzugt bis zu einem Festgehalt von 40 bis 80 Gew.-%, durchgeführt.

Flüchtige Restmonomere und weitere flüchtige Bestandteile können auch mittels Destillation oder Strippverfahren, vorzugsweise unter reduziertem Druck, entfernt werden.

Überraschenderweise sind die Pfropfcopolymere als Low-Profile-Additive (LPA) wirksam. Polymere mit einer derartigen Polymerarchitektur sind bisher noch nicht als LPA eingesetzt worden. Besonders überraschend war, dass die Propfcopolymere ihre Wirkung als LPA auch schon bei Raumtemperatur entfalten. Darüberhinaus zeigen Composite-Bauteile enthaltend die erfindungsgemäßen Pfropfcopolymere gegenüber entsprechend mit gängigen LPA modifizierten Composite-Bauteilen eine bessere Pigmentierung auf. Unter Pigmentierung wird die Farbstärke, Farbsättigung, Oberflächenglanz und insbesondere die gleichmäßige, homogene Einfärbung von Composite-Bauteilen verstanden.

Bei der Herstellung von flächigen Kunststoffteilen durch wärmehärtung von ungesättigten Polyesterharz-Zusammensetzungen (UP-Harze) werden Low-Profile-Additive zugesetzt, um den dabei auftretenden Volumenschwund zu reduzieren bzw. zu kompensieren. Das Low-Profile-Additiv reduziert das Schrumpfen beim Aushärten, baut Eigenspannungen ab, verringert Mikrorissbildung und erleichtert die Einhaltung von Fertigungstoleranzen.

Für die Anwendung als Low-Profile-Additiv werden die Pfropfcopolymere in reaktiven Monomeren, vorzugsweise in einem oder mehreren Vinylestern a) und/oder einem oder mehreren Monomeren c), besonders bevorzugt in Styrol, gelöst und gegebenenfalls mit weiteren Additiven wie Füllstoffen, Verdickern, Initiatoren und Verarbeitungshilfsmitteln appliziert. Die Pfropfcopolymere können auch in Kombination mit herkömmlichen Low-Profile-Additiven verwendet werden. Beispielsweise in Kombination mit Polyvinylacetat, Polystyrol, carboxylfunktionellen Polyvinylacetaten und Polymethylmethacrylat.

Als ungesättigte Polyesterharz-Zusammensetzungen werden üblicherweise Reaktionsprodukte einer Dicarbonsäure oder eines Dicarbonsäureanhydrids mit einem Polyol eingesetzt. Derartige Polyesterharz-Zusammensetzungen enthalten üblicherweise zusätzlich ein oder mehrere Monomere mit ethylenisch ungesättigten Gruppen, im Allgemeinen Styrol. Styrol wird der Polyesterharz-Zusammensetzung zugegeben, um den Polyester zu lösen und um sicherzustellen, dass die Polyesterzusammensetzung eine fließfähige Masse ist. Zur Verstärkung der mit der Polyesterharz-Zusammensetzung erhaltenen Kunststoffteile enthalten die Polyesterharz-Zusammensetzungen noch Fasermaterialien wie Glasfaser, Carbonfaser oder entsprechende Fasermatten (Fiber Reinforced Plastic composites = FPR composites).

Die Pfropfcopolymere können für alle gängige Herstellungsverfahren von FRP Composites als Low-Profile-Additive eingesetzt werden, wie beispielsweise für Sheet Molding Compound Technology (SMC), Bulk Molding Compound Technology (BMC), Resin Transfer Molding (RTM), Resin Injection Molding (RIM). Ganz besonders sind die Pfropfcopolymere für Verfahren geeignet, bei welchen die Herstellung der Composite durch Härtung bei Raumtemperatur erfolgt, beispielsweise Hand-Lay-Up-, Spray-Up-, Vacuum Infusion-, Vacuum Bag Molding-, Seeman Composites Resin Infusion Molding-Verfahren (SCRIMP). Beim BMC-Verfahren werden die Bestandteile des Compounds, die styrolische Polyesterharz-Lösung, das Low-Profile-Additiv, der Vernetzungskatalysator, Füllstoff, Formtrennmittel sowie gegebenenfalls weitere Zusatzstoffe zu einer pastösen Masse vermischt, danach Glasfaser zugemischt und anschließend unter Anwendung von Druck und Temperatur das Formteil hergestellt. Beispielsweise werden mit dieser Technik Reflektoren für Autoscheinwerfer hergestellt. Bei dem SMC-Verfahren wird analog dem BMC-Verfahren eine pastöse Masse aus styrolischer Polyesterharz-Lösung, Low-Profile-Additiv, Vernetzungskatalysator, Füllstoff, Formtrennmittel sowie gegebenenfalls weiteren Zusatzstoffen hergestellt, welche auf zwei Trägerfolien aufgetragen wird. Anschließend werden geschnittene Glasfaserrovings auf eine der beiden Schichten aufgestreut und schließlich beide Trägerfolien miteinander vereint, so dass die erzeugten Schichten miteinander in Kontakt kommen. Es folgt eine Kompaktierung durch ein System von Walzen. Der resultierende flächige SMC-Compound wird dann auf aufgerollt und mindestens drei Tage unter definierten Bedingungen gelagert, was als Reifung bezeichnet wird. Schließlich wird der flächige Sandwich von der Folie abgezogen, in Stücke geschnitten und unter Anwendung von Druck und Temperatur zu Formteilen verpresst. Formteile, welche mittels dieser Technik hergestellt werden, werden beispielsweise als Heckklappen von Automobilen eingesetzt.

Die Zusammensetzung der Rezepturen sowie die Einsatzmengen der Low-Profile-Additive hängen von dem gewählten Herstellungsverfahren ab und sind dem Fachmann bekannt. Im Allgemeinen werden die Pfropfcopolymere in einer 10 bis 50 Gew.-%-igen Lösung in ethylenisch ungesättigten Monomeren, vorzugsweise Styrol, appliziert. Die Einsatzmenge beträgt im Allgemeinen 5 bis 90 Gew.-Teile, vorzugsweise 30 bis 70 Gew.-Teile der Lösung, bezogen auf 100 Gew.-Teile Harz.

Durch Einsatz der Pfropfcopolymere als Polymerzusatz, wie beispielsweise als LPA, werden Kunststoffteile mit vermindertem Schrumpf insbesondere bei Härtung bei Raumtemperatur erhalten. Die Pfropfcopolymere sind auch als Modifizierungsmittel für weitere Anwendungen geeignet, beispielsweise als Additive in der Kunststoffverarbeitung, Papierstreicherei oder für Druckfarben oder Lacke. Hierbei kann mit den Pfropfcopolymeren beispielsweise die Verträglichkeit der einzelnen Komponenten entsprechender Formulierungen oder das Druckbild verbessert oder eine Sauerstoffbarriere hergestellt werden.

Die nachfolgenden Beispiele dienen zur weiteren Erläuterung der Erfindung, ohne diese in irgendeiner Weise einzuschränken.

### Herstellung der Makromonomere (Produkte der Stufe B)):

### Makromonomer 1:

In einem 21-Glasrührtopf mit Ankerrührer, Rückflusskühler und Dosiereinrichtungen wurden 57,0 g Vinylacetat, 2,2 g Glycidylmethacrylat, 22,1 g Isopropanol und 0,5 g PPV (t-Butylperpivalat, 75 %-ige Lösung in Aliphaten) vorgelegt. Anschließend wurde die Vorlage bei einer Rührerdrehzahl von 200 Upm unter Stickstoff auf 70°C aufgeheizt. Nach Erreichen der Innentemperatur von 70°C wurde 367,0 g Vinylacetat, 12,0 g Glycidylmethacrylat, 6,2 g Isopropanol und Initiatorlösung (0,8 g PPV) zudosiert. Die Monomerlösung wurde innerhalb von 240 Minuten und die Initiatorlösung innerhalb von 300 Minuten zudosiert. Nach Ende der Initiatordosierung wurde noch 2 Stunden bei 80°C nachpolymerisiert. Unter Vakuum und erhöhter Temperatur wurden flüchtige Bestandteile abdestilliert. Zu dem so erhaltenen Polymerisat wurden bei 125 °C 16 g Butylacetat, 0,6 g Inhibitor (hydrochinon), 7,2 g Methacrylsäure und 2,0 g Katalysator (Triphenylphosphin) über einen Zeitraum von 20 Minuten dosiert und die Reaktionsmischung für weitere 180 Minuten bei 225 °C gehalten, ehe flüchtige Bestandteile destillativ entfernt wurden. Das so erhaltene Polymerisat (Makromonomer 1) wurde isoliert. Das Makromonomer 1 war ein vollstängig modifiziertes Vinylestercopolymer, d.h. sämtliche Glycidylmethacrylat-Einheiten waren mit Methacrylsäure modifiziert. Das Makromonomer 1 hatte einen Gehalt an Restmonomeren von unter 0,5 Gew.-%, bezogen auf die Gesamtmasse des Polymerisats. Die Höppler-Viskosität des Makromonomers 1, bestimmt nach DIN 53015 (10 % in Ethylacetat bei 20 °C), betrug 2,3 mPas, sein zahlenmittleres Molekulargewicht, bestimmt mittels Größenausschlusschromatographie in THF bei 60°C gegenüber engverteilten Polystyrolstandards, betrug 13000 g/mol.

### Makromonomer 2:

In einem 21-Glasrührtopf mit Ankerrührer, Rückflusskühler und Dosiereinrichtungen wurden 57,0 g Vinylacetat, 1,0 g Acrylsäure, 22,1 g Isopropanol und 0,5 g PPV (t-Butylperpivalat, 75 %-ige Lösung in Aliphaten) vorgelegt. Anschließend wurde die Vorlage bei einer Rührerdrehzahl von 200 Upm unter Stickstoff auf 70°C aufgeheizt. Nach Erreichen der Innentemperatur von 70°C wurde 367,0 g Vinylacetat, 4,0 g Acrylsäure, 6,2 g Isopropanol und Initiatorlösung (0,8 g PPV) zudosiert. Die Monomerlösung wurde innerhalb von 240 Minuten und die Initiatorlösung innerhalb von 300 Minuten zudosiert. Nach Ende der Initiatordosierung wurde noch 2 Stunden bei 80°C nachpolymerisiert. Unter Vakuum und erhöhter Temperatur wurden flüchtige Bestandteile abdestilliert. Zu dem so erhaltenen Polymerisat wurden bei 125 °C 16 g Butylacetat, 0,6 g Inhibitor (Hydrochinon), 9,0 g Glycidylmethacrylat und 2,1 g Katalysator (Triphenylphosphin) über einen Zeitraum von 20 Minuten dosiert und die Reaktionsmischung für weitere 180 Minuten bei 125 °C gehalten, ehe flüchtige Bestandteile destillativ entfernt wurden. Das so erhaltene Polymerisat (Makromonomer 2) wurde isoliert. In Makromonomer 2 waren 91 Mol-% der Acrylsäure-Einheiten mit Glycidylmethacrylat modifiziert. Das Makromonomer 2 hatte einen Gehalt an Restmonomeren von unter 0,5 Gew.-%, bezogen auf die Gesamtmasse des Polymerisats. Die Höppler-Viskosität des Makromonomers 2 (10 % in Ethylacetat bei 20 °C), betrug 2,1 mPas, sein zahlenmittleres Molekulargewicht, bestimmt mittels Größenausschlusschromatographie gegenüber engverteilten Polystyrolstandards, betrug 11500 g/mol.

### Herstellung der Pfropfcopolymere

### Beispiel 1 (direkte Polymerisation in Styrol):

In einem 11-Glasrührtopf mit Ankerrührer, Rückflusskühler und Dosiereinrichtungen wurden 14,4 g des Polymerisats Makromonomer 1 in 299,0 g Styrol gelöst und nach Zugabe von 0,02 g tertiär Dodecylmercaptan und 0,25 g PPV bei 70 °C polymerisiert. Nach jeweils 30, 120 und 180 Minuten wurden 0,25 g PPV zugegeben. Schließlich wurde die Polymerisationsreaktion nach 300 Minuten durch Zugabe von 0,16 g eines Inhibitors (Hydrochinon) abgebrochen und der Feststoffgehalt des erhaltenen Produkts durch Styrolzugabe auf 40 % eingestellt.

Die Höppler-Viskosität des synthetisierten Pfropfcopolymers (10 %ig in Ethylacetat) betrug 10,4 mPas, das mittels Größenausschluss-chromatographie gegenüber engverteilten Polystyrolstandards ermittelte zahlenmittlere Molekulargewicht betrug 31700 g/mol.

### Beispiel 2 (Suspensionspolymerisation):

In einem 31-Glasrührtopf mit Ankerrührer, Rückflusskühler und Dosiereinrichtungen wurden 60,2 g Makromonomer 1 mit 541,7 g Styrol vermengt und nach Zugabe von 6,0 g tertiär-Dodecylmercaptan, 10 g tertiär-Butylper-2-ethylhexanoat, 1204 g deionisiertem Wasser und 12,1 g Poly(vinylalkohol) (Mowiol 56-88) für 240 Minuten bei 70 °C und anschließend für 120 Minuten bei 90 °C polymerisiert. Nach beendeter Reaktion wurde das Polymer durch Trocknung isoliert, und die erhaltenen Polymerpartikel wurden in Styrol gelöst, so dass eine 40 %ige Lösung des gepfropften Polymers resultierte.

Die Höppler-Viskosität des synthetisierten Pfropfcopolymers (10 %ig in Ethylacetat) betrug 4,1 mPas, das mittels Größenausschluss-chromatographie gegenüber engverteilten Polystyrolstandards ermittelte zahlenmittlere Molekulargewicht betrug 25100 g/mol.

### Beispiel 3 (Lösungspolymerisation):

In einem 11-Glasrührtopf mit Ankerrührer, Rückflusskühler und Dosiereinrichtungen wurden 14,4 g des Polymerisats Makromonomer 2 in 200 g Ethylacetat gelöst und nach Zugabe von 100 g Styrol, 0,5 g tertiär Dodecylmercaptan und 0,5 g PPV bei 70 °C polymeri-siert. Nach jeweils 30, 120 und 180 Minuten wurden 0,25 g PPV zugegeben. Nach 360 Minuten wurde das Ethylacetat destillativ entfernt und das erhaltene Polymerisat in Styrol gelöst, so dass eine 40 %ige Lösung resultierte.

Die Höppler-Viskosität des synthetisierten Pfropfcopolymers (10 %ig in Ethylacetat) betrug 3,7 mPas, das mittels Größenausschluss-chromatographie gegenüber engverteilten Polystyrolstandards ermittelte zahlenmittlere Molekulargewicht betrug 18000 g/mol.

### Beispiel 4 (Lösungspolymerisation):

In einem 11-Glasrührtopf mit Ankerrührer, Rückflusskühler und Dosiereinrichtungen wurden 14,4 g des Polymerisats Makromonomer 1 in 200 g Ethylacetat gelöst und nach Zugabe von 98 g Styrol, 2 g Methacrylsäure, 0,5 g tertiär Dodecylmercaptan und 0,5 g PPV bei 70 °C polymerisiert. Nach jeweils 30, 120 und 180 Minuten wurden 0,25 g PPV zugegeben. Nach 360 Minuten wurde das Ethylacetat destillativ entfernt und das erhaltene Polymerisat in Styrol gelöst, so dass eine 40 %ige Lösung resultierte.

Die Höppler-Viskosität des synthetisierten Pfropfcopolymers (10 %ig in Ethylacetat) betrug 3,6 mPas, das mittels Größenausschluss-chromatographie gegenüber engverteilten Polystyrolstandards ermittelte zahlenmittlere Molekulargewicht betrug 19800 g/mol.

### Vergleichsbeispiel 5 :

Zum Vergleich wurde ein Polymer analog Beispiel 1 hergestellt, allerdings ohne Verwendung des Makromonomers 1.

Die Höppler-Viskosität des synthetisierten Polystyrols (10 %ig in Ethylacetat) betrug 6,4 mPas, das mittels Größenausschlüsschromatographie gegenüber engverteilten Polystyrolstandards ermittelte zahlenmittlere Molekulargewicht betrug 40600 g/mol.

### Vergleichsbeispiel 6:

Zum Vergleich wurde ein Polymer analog Beispiel 2 hergestellt, allerdings ohne Verwendung des Makromonomers 1.

Die Höppler-Viskosität des synthetisierten Polystyrols (10 %ig in Ethylacetat) betrug 2,8 mPas, das mittels Größenausschlusschromatographie gegenüber engverteilten Polystyrolstandards ermittelte zahlenmittlere Molekulargewicht betrug 16900 g/mol.

### Einsatz der Pfropfcopolymere als LPA

### 1.) Härtung von UP-Harz-Zusammensetzungen bei 23 °C

Aus den in der Tabelle 1 aufgeführten Rohstoffen wurde eine Mischung hergestellt und kurz entgast. Die Dichte der entgasten Mischung wurde ermittelt, danach wurde die Mischung in eine Form gegossen und bei Raumtemperatur (23 °C) für 48 Stunden gehärtet. Schließlich wurde die Dichte des gehärteten Formkörpers bestimmt. Der Schrumpf wurde durch Vergleich der Dichten der Mischung vor dem Aushärten sowie des Formkörpers nach dem Aushärten ermittelt (Tabelle 2). Minuswerte zeigen an, dass der Formkörper nach dem Aushärten größer als die ursprüngliche Form war.

**Tabelle 1: Formulierung für Kunststoffformkörper:**

| **Type** | **Rohstoff** | **Gew.-T.** |
|---|---|---|
| Palapreg^{®} P18-21 | UP-Harz (ca. 65,0 %ig in Styrol) | 60,0 |
| LPA | LPA (40 %ig in Styrol) | 40,0 |
| Styrol | Monostyrol | 20,0 |
| Butanox^{®} M 50 | Peroxid | 1,5 |
| Akzo Nobel NL-49 | Beschleuniger (1 %ig Co in Ester) | 0,5 |

Als Low-Profile-Additive (LPA) wurden eingesetzt:
LPA1: Pfropfcopolymer aus Beispiel 1.
LPA2: Pfropfcopolymer aus Beispiel 2.
LPA3: Pfropfcopolymer aus Beispiel 3.
LPA4: Pfropfcopolymer aus Beispiel 4.
LPAV1 (Vergleich): Makromonomer 1.
LPAV2 (Vergleich): Makromonomer 2.
LPAV3 (Vergleich): Polymer aus Beispiel 5.
LPAV4 (Vergleich): Polymer aus Beispiel 6.
LPAV5 (Vergleich): Modiper^{®} SV10 A (säuremodifiziertes Styrol/Vinylacetat-Blockcopolymer der Nippon Oil and Fats Company, Limited (JP)).
LPAV6 (Vergleich): Modiper^{®} SV10 B (Styrol/Vinylacetat-Blockcopolymer der Nippon Oil and Fats Company, Limited (JP)).
LPAV7 (Vergleich): Vinnapas^{®} C501 (säuremodifiziertes Polyvinylacetat der Wacker Chemie AG (D)).

**Tabelle 2: Schrumpf der Formkörper:**

| LPA | Dichte der Mischung vor dem Aushärten | Dichte des Formkörpers nach Härtung bei 23°C | Schrumpf |
|---|---|---|---|
| | [g/mm³] | [g/mm³] | [‰] |
| - | 1,093 | 1,198 | 8,76 |
| LPA1 | 1,032 | 1,033 | 0,10 |
| LPA2 | 1,033 | 1,028 | -0,49 |
| LPA3 | 1,030 | 1,081 | 0,05 |
| LPA4 | 1,035 | 1,056 | -0,02 |
| LPAV1 | 1,035 | 1,115 | 7,17 |
| LPAV2 | 1,034 | 1,123 | 7,92 |
| LPAV3 | 1,030 | 1,120 | 8,03 |
| LPAV4 | 1,027 | 1,129 | 9,03 |
| LPAV5 | 1,036 | 1,068 | 3,00 |
| LPAV6 | 1,035 | 1,056 | 1,99 |
| LPAV7 | 1,044 | 1,162 | 8,74 |

Aus der Tabelle 2 geht hervor, dass herkömmliche carboxylfunktionelle Polyvinylacetate (Vinnapas^{®} C501), Polystyrole und die Makromonomere bei Raumtemperaturhärtung nicht als LPA wirksam sind. Kommerzielle Blockcopolymere auf Basis von Styrol und Vinylacetat (Modiper^{®} SV10A und Modiper^{®} SV10B) zeigen gegenüber den erfindungsgemäßen Pfropfcopolymeren bei der Raumtemperaturhärtung eine signifikant schlechtere Wirksamkeit.

### 2. Härtung von UP-Harz-Zusammensetzungen bei 160 °C

Aus den in Tabelle 3 aufgeführten Harzen und Additiven wurde mittels eines Labor-Dissolvers eine Harzpaste hergestellt. Anschließend wurde diese Harzpaste in einem Laborkneter mit dem Füllstoff Calciumcarbonat und den Glasfasern homogen vermischt. Der erhaltene BMC-Compound wurde Styrol-dicht verpackt und 3 Tage bei 23 ° C gelagert. Anschließend wurde der Compound durch Einlegen in eine Hochdruckpresse zu Testplatten mit einer Dicke von 3,0 mm verpresst (160 °C, 700 kN Presskraft, 3 Minuten).

**Tabelle 3: Formulierung für BMC-Compound:**

| **Type** | **Rohstoff** | **Gew.-T.** |
|---|---|---|
| Palapreg^{®} P18-21 | UP-Harz (ca. 65,0 %ig in Styrol) | 62,5 |
| CC Russ 9257-45 | Pigmentpaste, schwarz | 10,0 |
| LPA | LPA (40 %ig in Styrol) | 20,0 |
| Styrol | Monostyrol | 10,0 |
| Trigonox^{®} C | Peroxid der AkzoNobel N.V. (NL) | 1,0 |
| Trigonox^{®} 21 | Peroxid der AkzoNobel N.V. (NL) | 0,5 |
| Luvatol^{®} MK 35 | Magnesiumoxidpaste der Lehman & Voss & Co. KG (D) | 3,0 |
| para-Benzochinon | Inhibitor (10 %ig in Methylmethacrylat) | 0,3 |
| Hydrochinon | Inhibitor | 0,3 |
| Calciumstearat | Releaseagens | 4,0 |
| Millicarb^{®} OG | Calziumcarbonat | 300,0 |
| Glass 163D-14C (4mm) | Glasfasern | 45,0 |

Nach Entformen und Abkühlen wurden Schrumpf und Pigmentierung bestimmt. Die in Abhängigkeit vom eingesetzten LPA ermittelten Werte sind in Tabelle 4 verzeichnet. Der lineare Schrumpf wurde durch Abmessen bestimmt. Die Pigmentierung wurde mittels optischer Beurteilungskriterien qualitativ bewertet (schlecht = deutlicher Marmoreffekt, stark inhomogene Verteilung der Pigmente, mittel = leichter Marmoreffekt oder leichte Inhomogenitäten in der Einfärbung erkennbar, gut = homogene Einfärbung).

**Tabelle 4: Schrumpf und Pigmentierung in Abhängigkeit des verwendeten LPA:**

| LPA | Linearer Schrumpf [%] | Pigmentierung |
|---|---|---|
| - | 0,50 | gut |
| LPAV3 | 0,15 | gut |
| LPAV7 | 0,06 | schlecht |
| LPA 1 | 0,05 | gut |
| LPA 2 | 0,07 | mittel |
| LPAV5 | 0,10 | mittel |

Aus der Tabelle 4 geht hervor, dass ohne LPA zwar eine homogene Einfärbung erreicht wird, der Schrumpf mit 0,5 % aber sehr hoch ist. Letzteres führt zu einer schlechten Oberflächenqualität. Durch Einsatz von carboxylfunktionellem Polyvinylacetat (LPAV7, Vinnapas^{®} C501) wird zwar eine gute Schrumpfkontrolle erreicht, aber die Pigmentierung ist schlecht. Mit Polystyrol (LPAV3) ist der Schrumpf hoch. Mit den erfindungsgemäßen Propfcopolymeren werden dagegen die gewünschten Schrumpfwerte und zugleich eine gute Pigmentierung erreicht.

## Patentansprüche

1. Pfropfcopolymere erhältlich durch
A) radikalisch initiierte Polymerisation von einem oder mehreren Vinylestern a),
einem oder mehreren weiteren ethylenisch ungesättigten Monomeren b) enthaltend zumindest eine weitere funktionelle Gruppe,
B) anschließende polymeranaloge Umsetzung der Copolymere aus Stufe A), indem deren Monomereinheiten b) mit einem oder mehreren weiteren Monomeren b) so verknüpft werden, dass zumindest eine radikalisch polymerisierbare Gruppe in die Copolymere aus Stufe A) eingebracht wird, **dadurch gekennzeichnet, dass**
C) an die Produkte aus Stufe B) ein oder mehrere ethylenisch ungesättigte Mono- oder Dicarbonsäuren oder deren Salze, Ester der Acrylsäure oder Methacrylsäure von unverzweigten oder verzweigten Alkoholen mit 1 bis 15 C-Atomen, Vinylhalogenide oder Vinylaromaten durch radikalisch initiierte Polymerisation anpolymerisiert werden, und wobei die Pfropfcopolymere Molekulargewichte Mn von 1.000 bis 400.000 g/mol haben.

2. Pfropfcopolymere nach Anspruch 1, **dadurch gekennzeichnet, dass** als Vinylester a) ein oder mehrere Vinylester von unverzweigten oder verzweigten Carbonsäuren mit 1 bis 20 C-Atomen eingesetzt werden.

3. Pfropfcopolymere nach Anspruch 1 oder 2, **dadurch gekennzeichnet, dass** als Monomere b) ein oder mehrere Monomere ausgewählt werden aus der Gruppe umfassend ethylenisch ungesättigte Mono- und Dicarbonsäuren oder deren Salze, Monoester der Fumarsäure oder der Maleinsäure, ethylenisch ungesättigte Sulfonsäuren oder deren Salze, ethylenisch ungesättigte Alkohole, ethylenisch ungesättigte primäre, sekundäre oder tertiäre Amine, ethylenisch ungesättigten Amide, Phosphonsäuren oder deren Salze, ethylenisch ungesättigte Epoxide mit 1 bis 20 C-Atomen, ethylenisch ungesättigte Isocyanate und ethylenisch ungesättigte Anhydride.

4. Pfropfcopolymere nach Anspruch 1 bis 3, **dadurch gekennzeichnet, dass** die Copolymerisate der Stufe A) erhältlich sind durch radikalisch initiierte Polymerisation von einem oder mehreren Vinylestern a),
einem oder mehreren weiteren ethylenisch ungesättigten Monomeren b) ausgewählt aus der Gruppe umfassend ethylenisch ungesättigte, Epoxy-funktionelle Monomere b) und gegebenenfalls einem oder mehreren zusätzlichen Monomeren c).

5. Pfropfcopolymere nach Anspruch 1 bis 4, **dadurch gekennzeichnet, dass** die Copolymerisate der Stufe A) erhältlich sind durch radikalisch initiierte Polymerisation von einem oder mehreren Vinylestern a),
einem oder mehreren weiteren ethylenisch ungesättigten Monomeren b) ausgewählt aus der Gruppe umfassend ethylenisch ungesättigte Carbonsäurenb) und
gegebenenfalls einem oder mehreren zusätzlichen Monomeren c) .

6. Pfropfcopolymere nach Anspruch 4, **dadurch gekennzeichnet, dass** in Stufe B) ein oder mehrere Monomere b) eingesetzt werden aus der Gruppe umfassend ethylenisch ungesättigte Mono- und Dicarbonsäuren oder deren Salze, Monoester der Fumarsäure oder der Maleinsäure, ethylenisch ungesättigte Sulfonsäuren oder deren Salze, ethylenisch ungesättigte Alkohole, ethylenisch ungesättigte primäre, sekundäre oder tertiäre Amine, ethylenisch ungesättigte Amide und Phosphonsäuren oder deren Salze.

7. Pfropfcopolymere nach Anspruch 5, **dadurch gekennzeichnet, dass** in Stufe B) ein oder mehrere Monomere b) eingesetzt werden aus der Gruppe umfassend ethylenisch ungesättigte Epoxide mit 1 bis 20 C-Atomen, ethylenisch ungesättigte Isocyanate und ethylenisch ungesättigte Anhydride.

8. Pfropfcopolymere nach Anspruch 1 bis 7, **dadurch gekennzeichnet, dass** in Stufe A) zusätzlich ein oder mehrere Monomere c) eingesetzt werden, ausgewählt aus der Gruppe umfassend Methacrylsäureester und Acrylsäureester von unverzweigten oder verzweigten Alkoholen mit 1 bis 15 C-Atomen, Vinylaromaten, Olefine, Diene, Vinylhalogenide, Silan-Monomere und Polysiloxane mit mindestens einer radikalisch polymerisierbaren funktionellen Gruppe.

9. Pfropfcopolymere nach Anspruch 1 bis 8, **dadurch gekennzeichnet, dass** die ethylenisch ungesättigten Monomere in Stufe C) ausgewählt werden aus der Gruppe umfassend Methacrylsäure, Acrylsäure, Methylacrylat, Methylmethacrylat, Vinylchlorid und Styrol.

10. Pfropfcopolymere nach Anspruch 1 bis 9, **dadurch gekennzeichnet, dass** die ethylenisch ungesättigten Monomere in Stufe C) ausgewählt werden aus der Gruppe umfassend Methacrylsäure und Styrol.

11. Pfropfcopolymere nach Anspruch 1 bis 10, **dadurch gekennzeichnet, dass** in Stufe C) 60 bis 98 Gew.-% ethylenisch ungesättigter Monomere eingesetzt werden, bezogen auf das Gesamtgewicht der Produkte in Stufe C).

12. Verfahren zur Herstellung von Pfropfcopolymeren durch
A) radikalisch initiierte Polymerisation von einem oder mehreren Vinylestern a),
einem oder mehreren weiteren ethylenisch ungesättigten Monomeren b) enthaltend zumindest eine weitere funktionelle Gruppe,
B) anschließende polymeranaloge Umsetzung der Copolymere aus Stufe A), indem deren Monomereinheiten b) mit einem oder mehreren weiteren Monomeren b) so verknüpft werden, dass zumindest eine radikalisch polymerisierbare Gruppe in die Copolymere aus Stufe A) eingebracht wird, **dadurch gekennzeichnet, dass**
C) an die Produkte aus Stufe B) ein oder mehrere ethylenisch ungesättigte Mono- oder Dicarbonsäuren oder deren Salze, Ester der Acrylsäure oder Methacrylsäure von unverzweigten oder verzweigten Alkoholen mit 1 bis 15 C-Atomen, Vinylhalogenide oder Vinylaromaten durch radikalisch initiierte Polymerisation anpolymerisiert werden, und wobei die Pfropfcopolymere Molekulargewichte Mn von 1.000 bis 400.000 g/mol haben.

13. Verwendung der Pfropfcopolymere aus Anspruch 1 bis 11 als Low-Profile-Additive (LPA).

14. Verwendung der Pfropfcopolymere aus Anspruch 1 bis 11 als Additive in der Kunststoffverarbeitung, Papierstreicherei oder für Druckfarben oder Lacke.

## Claims

1. Graft copolymers obtainable via
A) free-radical-initiated polymerization of one or more vinyl esters a),
and of one or more further ethylenically unsaturated monomers b) comprising at least one further functional group,
B) and then polymer-analogous reaction of the copolymers from stage A), by linking monomer units b) thereof to one or more further monomers b) in such a way that at least one group capable of free-radical polymerization is introduced into the copolymers from stage A), **characterized in that**
C) free-radical-initiated polymerization is used to polymerize one or more ethylenically unsaturated mono- or dicarboxylic acids or salts thereof, or esters of acrylic acid or methacrylic acid of unbranched or branched alcohols having from 1 to 15 carbon atoms, or vinyl halides or vinylaromatics onto the products from stage B), and where the molar masses Mn of the graft copolymers are from 1000 to 400 000 g/mol.

2. Graft copolymers according to Claim 1, **characterized in that** vinyl esters a) used comprise one or more vinyl esters of unbranched or branched carboxylic acids having from 1 to 20 carbon atoms.

3. Graft copolymers according to Claim 1 or 2, **characterized in that** monomers b) selected comprise one or more monomers from the group comprising ethylenically unsaturated mono- and dicarboxylic acids and salts thereof, monoesters of fumaric acid or of maleic acid, ethylenically unsaturated sulfonic acids and salts thereof, ethylenically unsaturated alcohols, ethylenically unsaturated primary, secondary, or tertiary amines, ethylenically unsaturated amides, phosphonic acids and salts thereof, ethylenically unsaturated epoxides having from 1 to 20 carbon atoms, ethylenically unsaturated isocyanates, and ethylenically unsaturated anhydrides.

4. Graft copolymers according to any of Claims 1 to 3, **characterized in that** the copolymers of stage A) are obtainable via free-radical-initiated polymerization of one or more vinyl esters a),
and of one or more further ethylenically unsaturated monomers b) selected from the group comprising ethylenically unsaturated, epoxyfunctional monomers b) and optionally of one or more additional monomers c).

5. Graft copolymers according to any of Claims 1 to 4, **characterized in that** the copolymers of stage A) are obtainable via free-radical-initiated polymerization of one or more vinyl esters a),
and of one or more further ethylenically unsaturated monomers b) selected from the group comprising ethylenically unsaturated carboxylic acids b) and
optionally of one or more additional monomers c).

6. Graft copolymers according to Claim 4, **characterized in that**, in stage B), one or more monomers b) are used from the group comprising ethylenically unsaturated mono- and dicarboxylic acids and salts thereof, monoesters of fumaric acid or of maleic acid, ethylenically unsaturated sulfonic acids and salts thereof, ethylenically unsaturated alcohols, ethylenically unsaturated primary, secondary, or tertiary amines, ethylenically unsaturated amides, and phosphonic acids and salts thereof.

7. Graft copolymers according to Claim 5, **characterized in that**, in stage B), one or more monomers b) are used from the group comprising ethylenically unsaturated epoxides having from 1 to 20 carbon atoms, ethylenically unsaturated isocyanates, and ethylenically unsaturated anhydrides.

8. Graft copolymers according to any of Claims 1 to 7, **characterized in that**, in stage A), additional use is made of one or more monomers c) selected from the group comprising methacrylic esters and acrylic esters of unbranched or branched alcohols having from 1 to 15 carbon atoms, vinylaromatics, olefins, dienes, vinyl halides, silane monomers, and polysiloxanes having at least one functional group capable of free-radical polymerization.

9. Graft copolymers according to any of Claims 1 to 8, **characterized in that** the ethylenically unsaturated monomers in stage C) are selected from the group comprising methacrylic acid, acrylic acid, methyl acrylate, methyl methacrylate, vinyl chloride, and styrene.

10. Graft copolymers according to any of Claims 1 to 9, **characterized in that** the ethylenically unsaturated monomers in stage C) are selected from the group comprising methacrylic acid and styrene.

11. Graft copolymers according to any of Claims 1 to 10, **characterized in that** stage C) uses from 60 to 98% by weight of ethylenically unsaturated monomers, based on the total weight of the products in stage C).

12. Process for producing graft copolymers via
A) free-radical-initiated polymerization of one or more vinyl esters a),
and of one or more further ethylenically unsaturated monomers b) comprising at least one further functional group,
B) and then polymer-analogous reaction of the copolymers from stage A), by linking monomer units b) thereof to one or more further monomers b) in such a way that at least one group capable of free-radical polymerization is introduced into the copolymers from stage A), **characterized in that**
C) free-radical-initiated polymerization is used to polymerize one or more ethylenically unsaturated mono- or dicarboxylic acids or salts thereof, or esters of acrylic acid or methacrylic acid of unbranched or branched alcohols having from 1 to 15 carbon atoms, or vinyl halides or vinylaromatics onto the products from stage B), and where the molar masses Mn of the graft copolymers are from 1000 to 400 000 g/mol.

13. Use of the graft copolymers from any of Claims 1 to 11 as low-profile additives (LPA).

14. Use of the graft copolymers from any of Claims 1 to 11 as additives in plastics processing, for paper coating, or for printing inks or for coatings.

## Revendications

1. Copolymères greffés, pouvant être obtenus par
A) polymérisation à amorçage radicalaire d'un ou de plusieurs esters vinyliques a),
d'un ou de plusieurs autres monomères à insaturation éthylénique b) contenant au moins un autre groupe fonctionnel,
B) conversion subséquente en des polymères analogues des copolymères provenant de l'étape A), par attachement de leurs motifs monomères b) avec un ou plusieurs autres monomères b), de sorte qu'au moins un groupe apte à la polymérisation radicalaire est introduit dans les copolymères provenant de l'étape A), **caractérisés en ce**
C) **qu'**on attache par polymérisation aux produits provenant de l'étape B) un ou plusieurs acides mono- ou dicarboxyliques à insaturation éthylénique ou leurs sels, esters de l'acide acrylique ou méthacrylique d'alcools ramifiés ou non ramifiés ayant de 1 à 15 atomes de carbone, halogénures de vinyle ou composés vinylaromatiques, par polymérisation à amorçage radicalaire, et les copolymères greffés ayant des masses moléculaires Mn de 1 000 à 400 000 g/mol.

2. Copolymères greffés selon la revendication 1, **caractérisés en ce qu'**on utilise comme esters vinyliques a) un ou plusieurs esters vinyliques d'acides carboxyliques ramifiés ou non ramifiés ayant de 1 à 20 atomes de carbone.

3. Copolymères greffés selon la revendication 1 ou 2, **caractérisés en ce qu'**on choisit comme monomères b) un ou plusieurs monomères dans le groupe comprenant des acides mono- et dicarboxyliques à insaturation éthylénique ou leurs sels, des monoesters de l'acide fumarique ou de l'acide maléique, des acides sulfoniques à insaturation éthylénique ou leurs sels, des alcools à insaturation éthylénique, des amines primaires, secondaires ou tertiaires à insaturation éthylénique, des amides à insaturation éthylénique, des acides phosphoniques ou leurs sels, des époxydes à insaturation éthylénique ayant de 1 à 20 atomes de carbone, des isocyanates à insaturation éthylénique et des anhydrides à insaturation éthylénique.

4. Copolymères greffés selon l'une quelconque des revendications 1 à 3, **caractérisés en ce que** les copolymérisats de l'étape A) peuvent être obtenus par polymérisation à amorçage radicalaire d'un ou de plusieurs esters vinyliques a),
d'un ou de plusieurs autres monomères à insaturation éthylénique b) choisis dans le groupe comprenant des monomères b) à insaturation éthylénique, à fonction époxy, et éventuellement d'un ou de plusieurs monomères supplémentaires c).

5. Copolymères greffés selon l'une quelconque des revendications 1 à 4, **caractérisés en ce que** les copolymérisats de l'étape A) peuvent être obtenus par polymérisation à amorçage radicalaire d'un ou de plusieurs esters vinyliques a),
d'un ou de plusieurs autres monomères à insaturation éthylénique b) choisis dans le groupe comprenant des acides carboxyliques b) à insaturation éthylénique et éventuellement d'un ou de plusieurs monomères supplémentaires c).

6. Copolymères greffés selon la revendication 4, **caractérisés en ce que** dans l'étape B) on utilise un ou plusieurs monomères b) choisis dans le groupe comprenant des acides mono- et dicarboxyliques à insaturation éthylénique ou leurs sels, des monoesters de l'acide fumarique ou de l'acide maléique, des acides sulfoniques à insaturation éthylénique ou leurs sels, des alcools à insaturation éthylénique, des amines primaires, secondaires ou tertiaires à insaturation éthylénique, des amides à insaturation éthylénique, et des acides phosphoniques ou leurs sels.

7. Copolymères greffés selon la revendication 5, **caractérisés en ce que** dans l'étape B) on utilise un ou plusieurs monomères b) choisis dans le groupe comprenant des époxydes à insaturation éthylénique ayant de 1 à 20 atomes de carbone, des isocyanates à insaturation éthylénique et des anhydrides à insaturation éthylénique.

8. Copolymères greffés selon l'une quelconque des revendications 1 à 7, **caractérisés en ce que** dans l'étape A) on utilise en outre un ou plusieurs monomères c), choisis dans le groupe comprenant des esters d'acide méthacrylique et des esters d'acide acrylique d'alcools ramifiés ou non ramifiés ayant de 1 à 15 atomes de carbone, des composés vinylaromatiques, des oléfines, des diènes, des halogénures de vinyle, des monomères silane et des polysiloxanes comportant au moins un groupe fonctionnel apte à la polymérisation radicalaire.

9. Copolymères greffés selon l'une quelconque des revendications 1 à 8, **caractérisés en ce que** les monomères à insaturation éthylénique dans l'étape C) sont choisis dans le groupe comprenant l'acide méthacrylique, l'acide acrylique, l'acrylate de méthyle, le méthacrylate de méthyle, le chlorure de vinyle et le styrène.

10. Copolymères greffés selon l'une quelconque des revendications 1 à 9, **caractérisés en ce que** les monomères à insaturation éthylénique dans l'étape C) sont choisis dans le groupe comprenant l'acide méthacrylique et le styrène.

11. Copolymères greffés selon l'une quelconque des revendications 1 à 10, **caractérisés en ce que** dans l'étape C) on utilise de 60 à 98 % en poids de monomères à insaturation éthylénique, par rapport au poids total des produits dans l'étape C).

12. Procédé pour la préparation de copolymères greffés par
A) polymérisation à amorçage radicalaire d'un ou de plusieurs esters vinyliques a),
d'un ou de plusieurs autres monomères b) à insaturation éthylénique, contenant au moins un autre groupe fonctionnel,
B) conversion subséquente en des polymères analogues des copolymères provenant de l'étape A), par attachement de leurs motifs monomères b) avec un ou plusieurs autres monomères b), de sorte qu'au moins un groupe apte à la polymérisation radicalaire est introduit dans les copolymères provenant de l'étape A), **caractérisé en ce**
C) **qu'**on attache par polymérisation aux produits provenant de l'étape B) un ou plusieurs acides mono- ou dicarboxyliques à insaturation éthylénique ou leurs sels, esters de l'acide acrylique ou méthacrylique d'alcools ramifiés ou non ramifiés ayant de 1 à 15 atomes de carbone, halogénures de vinyle ou composés vinylaromatiques, par polymérisation à amorçage radicalaire, et les copolymères greffés ayant des masses moléculaires Mn de 1 000 à 400 000 g/mol.

13. Utilisation des copolymères greffés de l'une quelconque des revendications 1 à 11, en tant qu'additifs Low-Profile (LPA) [anti-retrait].

14. Utilisation des copolymères greffés de l'une quelconque des revendications 1 à 11, en tant qu'additifs dans la transformation des matières plastiques, le couchage du papier ou pour des encres d'impression ou des peintures.
